(19) Europäisches Patentamt
European Patent Office
Office européen des brevets

(11) **EP 2 227 857 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(21) Anmeldenummer: **08855751.7**

(22) Anmeldetag: **04.12.2008**

(51) Int Cl.:
*H02P 1/02* (2006.01)     *H02P 21/12* (2016.01)
*H02P 21/24* (2016.01)     *H02P 21/34* (2016.01)
*H02P 21/00* (2016.01)

(86) Internationale Anmeldenummer:
**PCT/EP2008/066832**

(87) Internationale Veröffentlichungsnummer:
**WO 2009/071642 (11.06.2009 Gazette 2009/24)**

(54) **AUFSCHALTEN EINES STEUERGERÄTS AUF EINE DREHGEBERLOS BETRIEBENE ASYNCHRONMASCHINE**

APPLYING A CONTROL UNIT TO AN ASYNCHRONOUS MACHINE WHICH IS OPERATED WITHOUT A ROTARY ENCODER

COMMUTATION D'UN APPAREIL DE COMMANDE SUR UNE MACHINE ASYNCHRONE FONCTIONNANT SANS CAPTEUR DE ROTATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **04.12.2007   DE 102007058209**

(43) Veröffentlichungstag der Anmeldung:
**15.09.2010   Patentblatt 2010/37**

(73) Patentinhaber: **Lenze Drives GmbH**
**32699 Extertal (DE)**

(72) Erfinder: **STICHWEH, Heiko**
**31832 Springe (DE)**

(74) Vertreter: **Leonhard, Frank Reimund**
**Leonhard & Partner**
**Patentanwälte**
**Postfach 10 09 62**
**80083 München (DE)**

(56) Entgegenhaltungen:
**EP-A- 0 469 177      WO-A- 02/103889**
**DE-A1- 4 107 362      DE-C1- 10 213 563**
**DE-C1- 19 919 752      JP-A- 2000 197 397**
**JP-A- 2002 369 597**

• **"CHAPTER 5: Einfacher Sinusstromkreis ED - Heinrich Frohne; Karl-Heinz Löcherer; Hans Müller" 1. Januar 2002 (2002-01-01), MOELLER GRUNDLAGEN DER ELEKTROTECHNIK (19. AUFLAGE), B. G. TEUBER VERLAG, DE, PAGE(S) 277 - 334 , XP009122458 ISBN: 978-3-519-56400-3 Seite 299 - Seite 300**

## Beschreibung

Das Verfahren dieser Erfindung dient der Auf- oder Zuschaltung eines Wechselrichters oder Umrichters (als Steuergerät) auf eine stehende oder rotierende Asynchronmaschine. Allgemein gesprochen ist das Steuergerät mit der Maschine nicht synchronisiert. Das Verfahren findet für Asynchronmaschinen Anwendung, bei denen die Drehzahl nicht zum Wechselrichter oder Umrichter rückgeführt wird (geberloser Betrieb), so dass zum Zeitpunkt des Auf- oder Zuschaltens keine Information über die aktuelle mechanische Drehzahl (als Istdrehzahl) der Asynchronmaschine vorliegt.

Das Steuergerät muss sich auf die drehende oder stehende Asynchronmaschine (ASM oder DAM) aufschalten und einsynchronisieren.

Der Vorgang der Identifikation der mechanischen Drehzahl bzw. der synchronen Drehfeldfrequenz bei einer geberlos betriebenen Asynchronmaschine wird in der Literatur als "Fangbetrieb" bezeichnet, vgl. bspw. **Witt&Sohn,** Einstellung von Frequenzumrichtern, IGW Ventilatoren. Eine zugehörige Schaltung, die ein derartiges Aufschalten unter Vermeidung von Strom- und Drehmomentspitzen ermöglicht, trägt den technischen Namen "Fangschaltung".

Die Fangschaltung ist in Applikationen erforderlich, in denen z.B. aufgrund größerer Massenträgheiten des Antriebs ein Aufschalten des Umrichters auf einen noch trudelnden Antrieb nicht ausgeschlossen werden kann. Weitere Anwendungsfelder sind im Bereich der Lüfertechnik zu sehen, wo zum Zeitpunkt des Aufschaltens die aktuelle Drehzahl des Antriebs nicht bekannt und aus ökonomischen Gründen auch nicht gemessen werden kann.

Eine Aufschaltung eines Umrichters auf eine rotierende Asynchronmaschine hätte in Abhängigkeit von restlicher Remanenz, von Schlupf und von eingeprägter Spannung einen hohen Strom und einen Drehmomentstoß zur Folge, welche es zu vermeiden gilt.

Verfahren zum Anlassen von Asynchronmaschinen in einer Situation mit einem stehenden oder rotierenden Läufer sind aus diverser Patentliteratur bekannt. Einige sollen vorgestellt werden. In der DE 38 20 125 C2 (aus 1988) wird ein Verfahren zum Anfahren eines wechselrichter-gespeisten geberlosen Asynchronmotors vorgestellt, welches ohne vorhandenen Restfluss in der Maschine ein Fangen eines drehenden Antriebs ermöglicht. Das Verfahren basiert auf einem in Rotorfeldkoordinaten gehaltenen Ersatzschaltbild der ASM, bei dem die Schlupffrequenz aus einer Messung des Klemmenstroms rekonstruiert wird. Aus der berechneten bzw. geschätzten Schlupffrequenz und der eingeprägten Ständerfrequenz wird die synchrone Drehfrequenz für die Steuerspannung ermittelt. Die zeitliche Änderung der drehmomentbildenden Stromkomponente wird hierbei als dynamischer Korrekturwert zu der Motorfrequenz addiert. Das Verfahren konvergiert in der synchronen Drehfrequenz des Antriebs und ermöglicht auf diese Weise eine Identifikation der synchronen Drehzahl.

Das in der DE 195 32 477 A1 beschriebene Verfahren zum Anlassen einer geberlosen Asynchronmaschine, welches sowohl mit als auch ohne Restfluss in der ASM funktioniert, verwendet eine Nullung des gebildeten Drehmoments. In diesem Verfahren wird der Statorstromzeiger gemessen und ein von der Spannung generierter Statorflusszeiger geschätzt bzw. bestimmt. Aus diesen Größen wird das am Motor verursachte Moment berechnet und mittels eines Reglers zu Null geregelt. Eine Anregung erfährt das System durch einen Stromimpuls, woraus folgt, dass bei eventueller Rotation der Maschine ein Moment gebildet wird, welches vom Regelsystem wunschgemäß geregelt werden kann.

Ein wesentliches Merkmal der beiden letztgenannten Verfahren ist es, dass aus der eingeprägten Spannung und dem gemessenen Strom ein Drehmoment berechnet wird, welches mit einer Regelung zu Null geregelt wird. Abweichend von diesem Ansatz wird in der DE 195 03 658 A1 ein Verfahren vorgestellt, welches die restliche Remanenz des Läuferflusses und die in der Statorwicklung induzierte Spannung nutzt. Bei nicht vorhandenem restlichem Rotorfluss kann das Verfahren ebenfalls Verwendung finden, indem eine Anregung mit einem Spannungsimpuls erfolgt.

Aus der Drehfeldfrequenz des induzierten Spannungszeigers, die über eine Differenzierung des Winkels des zu unterschiedlichen Zeitpunkten gemessenen Spannungszeigers ermittelt wird, wird ein Schätzwert für die mechanische Drehfeldfrequenz des Läufers abgeleitet.

In der EP 469 177 A1 wird ein Verfahren beschrieben, welches ebenfalls unter Ausnutzung des Remanenzeffektes die Drehzahl einer Asynchronmaschine bestimmt. Die Auswertung der durch die Remanenz des Rotors induzierten Klemmenspannung muss hierbei durch eine zusätzliche Schaltungsanordnung zur Spannungsmessung erfolgen, da während des Messvorgangs keine Spannung durch den Umrichter eingeprägt und die Endstufe gesperrt wird.

In ähnlicher Weise nutzt das Verfahren der DE 35 43 941 A1 die restliche Remanenz des Systems. Anhand der gemessenen induzierten Spannung wird ein phasen- und frequenzgleiches Rechtecksignal generiert, welches für die Identifikation der mechanischen Drehzahl bzw. der synchronen Drehfeldfrequenz verwendet wird.

In der DE 35 43 983 A1 wird ein Verfahren vorgestellt, welches zum Zuschalten eines Umrichters auf eine noch drehende, nicht erregte Drehmaschine geeignet ist. Bei diesem Verfahren handelt es sich um ein Suchverfahren, bei dem der Drehfrequenzbereich mit konstantem Sollstrom $I_S$ durchfahren wird. Anhand der Änderung der hierfür einzuprägenden Spannung (dU/dt) wird die Suchgeschwindigkeit angepasst und für größere Spannungs-Änderungen vermindert. Die mechanische Drehzahl wird anhand der Zunahme des Flusses im Bereich des synchronen Betriebspunkts erkannt. Nachteilig bei diesem Suchverfahren ist der Zeitbedarf für die Identifikation der mechanischen Drehzahl und das aufgrund der Aufmagnetisierung entstehende eingeprägte Drehmoment.

Die DE 199 19 752 C1 erläutert ein Verfahren, welches im Unterschied zu den vorigen Verfahren auf eine Berechnung des Drehmoments, des Rotorflusses oder des Momenten- oder Magnetisierungsstroms verzichtet. Weiterhin erfordert dieses Verfahren keine restliche Remanenz des Läufers. Bei diesem Verfahren wird der Sollwert für den Statorstromzeiger direkt aus dem Statorflusszeiger bestimmt, wobei die Richtung des Stromzeigers im Wesentlichen parallel zu der Richtung des Flusszeigers gewählt wird. Das Verfahren ermöglicht die Verwendung der in vielen Fällen bestehenden Stromregler-Strukturen (feldorientierte Regelung) und kann mit minimalem Aufwand eingebunden werden. Es setzt lediglich eine Erweiterung zur Berechnung des Statorflusszeigers voraus, welcher mittels der eingeprägten Spannung und des gemessenen Stroms bestimmt wird. **Die Problemstellung** der Erfindung liegt darin, eine Aufschaltung eines Steuergeräts auf eine Asynchronmaschine ohne einen hohen Strom und ohne einen Drehmomentstoß zu erreichen, und das mechanische und steuernde System nicht zu überlasten. Das Verfahren soll unabhängig von der restlichen Remanenz arbeitsfähig sein und bei geberlos betriebenen Asynchronmaschinen Verwendung finden.

Vorgeschlagen wir ein Verfahren nach Anspruch 1 und eine Einrichtung nach Anspruch 17.

Die hier vorgeschlagene Erfindung ermöglicht die Aufschaltung des Steuergeräts als Wechselrichter oder Umrichter auf die drehende oder stehende - gerberlose - Asynchronmaschine, ohne dass hierfür eine Berechnung des Drehmoments, des Rotor- oder Statorflusses, des mechanischen Schlupfes oder des Magnetisierungsstroms der Maschine erforderlich ist. Der fehlende Geber (geberlos) betrifft nicht vorhandene Drehzahlgeber oder entsprechende Sensoren.

Das Steuergerät (oder seine Steuereinrichtung) ermittelt die synchrone Drehfeldfrequenz und synchronisiert sich auf die drehende oder stehende Asynchronmaschine auf. Während des Aufschaltens werden unnötige Strom- und Drehmomentspitzen vermieden. Das Verfahren setzt keine restliche Remanenz bzw. keinen restlichen Rotorfluss voraus und funktioniert sowohl bei Antrieben mit und ohne restlichem Rotorfluss. Eine zusätzliche Hardware, z.B. zur Erfassung von Klemmspannungen des Steuergeräts, ist nicht notwendig. Gleichwohl kann die Remanenz der Maschine vorteilhaft verwendet werden (Anspruch 13).

Bedingt durch den erfindungsgemäß verwendeten kleinen (geringen) eingeprägten (einzuprägenden) Strom wird kein nennenswertes Drehmoment an der mechanischen Welle der Asynchronmaschine aufgebaut. Die Asynchronmaschine wird durch das erfindungsgemäße Verfahren weder nennenswert beschleunigt, noch abgebremst, noch ruckartigen Drehmomentstößen ausgesetzt. Vielmehr kann über einen Stromregler ein Auftreten von unerwünschten Stromspitzen vermieden werden (Anspruch 6).

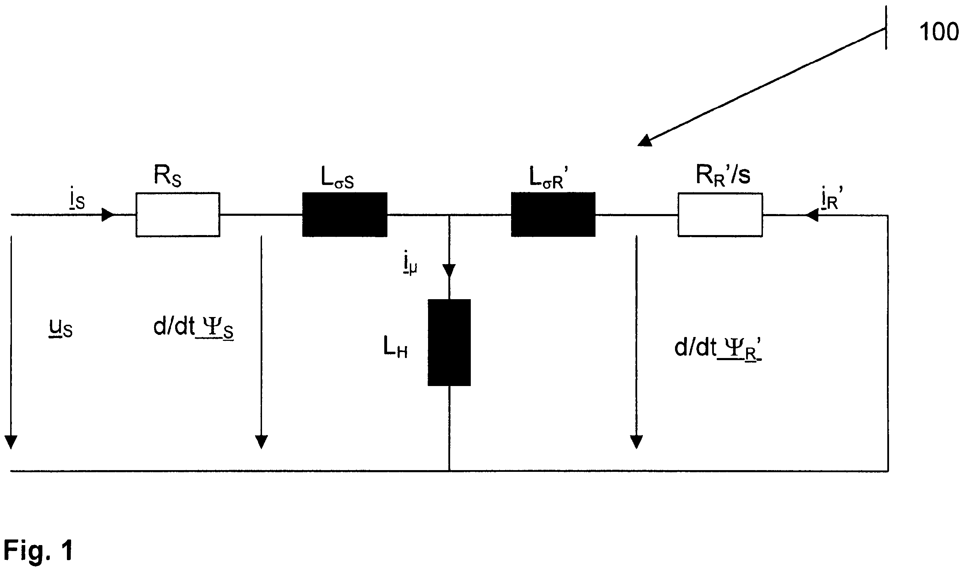

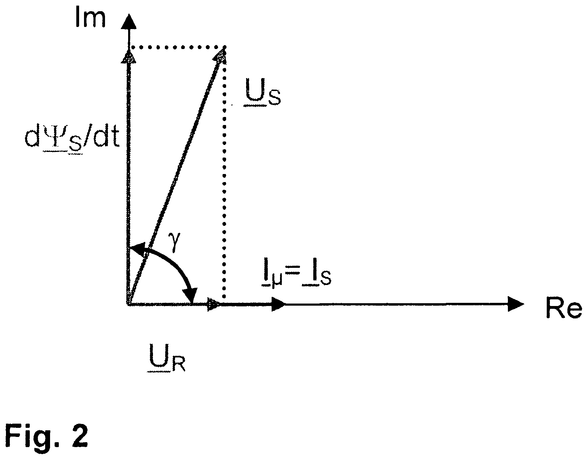

Im Folgenden soll zunächst der physikalische Effekt erläutert werden, welcher dem beanspruchten Verfahren zugrunde liegt. Das Verfahren verwendet ein Modell der Maschine (Anspruch 1, Merkmal (b)), bspw. ein Ersatzschaltbild der Asynchronmaschine, welches in der **Figur 1** dargestellt ist. Ziel des Fangverfahrens ist die Identifikation der synchronen Drehfeldfrequenz sowie das Aufschalten des Steuergeräts auf die Asynchronmaschine. Für den synchronen Betriebspunkt liegt kein Schlupf vor (s ist im Wesentlichen Null). Der Rotorstrom-Raumzeiger $\underline{i}_R$ weist aufgrund des fehlenden Schlupfes im synchronen Punkt eine Länge von Null auf, vgl. **Figur 2.** Folglich ist der Ständerstrom-Raumzeiger bzw. Ständerstromvektor $\underline{i}_S$ in diesem Betriebspunkt gleich dem Magnetisierungs-Stromzeiger $\underline{i}_\mu$.

Für den Ständerstromvektor gilt im synchronen Betriebspunkt

$$\underline{i}_\mu = \underline{i}_S \tag{1}$$

Aus dem eingeprägten Ständer-Spannungsvektor und dem gemessenen Ständer-Stromvektor kann unter Kenntnis des Ständerwiderstands und gegebenenfalls eines Umrichter- oder Wechselrichterfehlers der Ständerfluss-Änderungsvektor berechnet werden (Ansprüche 1, 17, Merkmal (b)).

$$\underline{U}_S = R_S \underline{i}_S + \frac{d}{dt} \underline{\Psi}_S \tag{2}$$

Für den synchronen Betriebspunkt weist der Ständerstromvektor einen 90°-Winkel zum Ständerfluss-Änderungsvektor auf. Ständerfluss-Änderungsvektor und Ständerstromvektor stehen senkrecht aufeinander.

$$\gamma = \angle\left(\underline{i}_s, \frac{d}{dt}\underline{\Psi}_s\right)$$

$$\left|\gamma_{\text{Synchron}}\right| = \left|\angle\left(\underline{i}_s, \frac{d}{dt}\underline{\Psi}_s\right)\right| = \left|\angle\left(\underline{i}_\mu, \frac{d}{dt}\underline{\Psi}_s\right)\right| = 90° \tag{3}$$

Abweichend vom synchronen Punkt ist der Winkel $\gamma$ bei positiver Drehfeldrichtung für den motorischen Betrieb kleiner als 90° und für den generatorischen Betrieb größer als 90°. Die Erfindung sieht damit ein Regler vor (Anspruch 1, Merkmal (c) und (d)), welcher den Winkel $\gamma$ bei positiver Drehfeldrichtung auf 90° ausregelt. Parallel zu oder zusammen mit der Winkelregelung wird die Amplitude des Ständerstromvektors auf einen Stromsollwert geregelt, um Überströme und Stromspitzen zu vermeiden (Anspruch 1, Merkmal (e), Anspruch 6).

Die Ständer-Drehfeldfrequenz stellt in den Beispielen der Erfindung eine Zustandsgröße dar, die zu Beginn des Verfahrens mit einem Startwert als Frequenz initialisiert werden kann, ja eigentlich sollte (Anspruch 12, 18).

Als Initialisierungswert (erste Frequenz) bieten sich je nach Applikation unterschiedliche Frequenzen an. Z.B. kann die letzte bekannte (mechanische) ISTfrequenz der Asynchronmaschine oder ein konstanter Startwert verwendet werden. Auch eine Vorsteuerung der Frequenz $\omega$- abhängig von einer Remanenz der Asynchronmaschine verwendet.

Das Winkelsignal als Ausgang des Reglers für die Winkeldifferenz kann von einer Vorsteuerung beeinflusst sein (Anspruch 13, 14 und 15). Dabei wird bevorzugt die Remanenz der Maschine ergänzend verwendet, welche mit der mechanischen Drehfrequenz rotiert und gegenüber der Frequenz des eingeprägten Ständerspannungsvektors um die Schlupffrequenz abweicht. Für eine Vorsteuerung kann die Schlupffrequenz bei Maschinen mit Remanenz ermittelt und anschließend auf das Ausgangssignal des Reglers für die Winkeldifferenz aufgeschaltet werden. Eine Ermittlung der Drehkomponente mit der Schlupffrequenz ist z.B. anhand einer zeitlich veränderlichen Ausrichtung des Ständerfluss-Änderungsvektors möglich.

Diese Vorsteuerung bestimmt, zumindest zum Teil, das Ausgangssignal des Winkelreglers (Anspruch 14). Bevorzugt ist diese Vorsteuerung nicht nur ein Startwert, sondern ein auf Dauer angelegter Einfluss (Anspruch 15).

Die Zeit bis zum Erreichen der Synchronität zwischen tatsächlicher mechanischer Drehzahl und eingeprägter oder einprägender Frequenz des Steuergeräts, als Wechselrichter oder Umrichter, kann auf diese Weise deutlich reduziert werden.

Die Erfindung wird anhand von Ausführungs**beispielen** erläutert und ergänzt, wobei darauf hingewiesen wird, dass es sich bei der folgenden Darstellung um die Beschreibung von bevorzugten Beispielen der Erfindung handelt.

**Figur 1**     ist ein mögliches Ersatzschaltbild 100 einer Asynchronmaschine.

**Figur 2**     veranschaulicht ein Zeigerdiagramm der Strom-, Spannungs- und Flussänderungs-Raumzeiger für den synchronen Punkt (s=0).

**Figur 3**     veranschaulicht den Aufbau eines Steuergeräts als Frequenz-Umrichter 10 mit speisendem Netz, Gleichrichter, Wechselrichter, 2- bzw. 3-phasiger Stromerfassung, Asynchronmaschine 5 und anderen Komponenten.

**Figur 4**     ist eine Darstellung einer ersten Winkeldifferenz-Regelung mit Regler 50 für die Fangschaltung.

**Figur 5**     ist eine Stromregelung mit Regler 51 und der Pulsbildungssatz für das Steuergerät.

**Figur 6**     ist eine Stromregelung im d, q System sowie ein Pulsbildungssatz für das Steuergerät.

**Figur 7**     ist ein Vektordiagramm zur Erläuterung einer Remanenzauswertung.

**Figur 7a**     ist eine Funktion 52 einer Remanenzauswertung für eine Vorsteuerung in Figur 8.

**Figur 7b**     ist die Darstellung der Funktion aus Figur 7a.

**Figur 8**     ist eine Darstellung einer alternativen Winkeldifferenz-Regelung mit Remanenz-Einfluss von Figuren 7,7a und 7b und Regler 50 aus Figur 4.

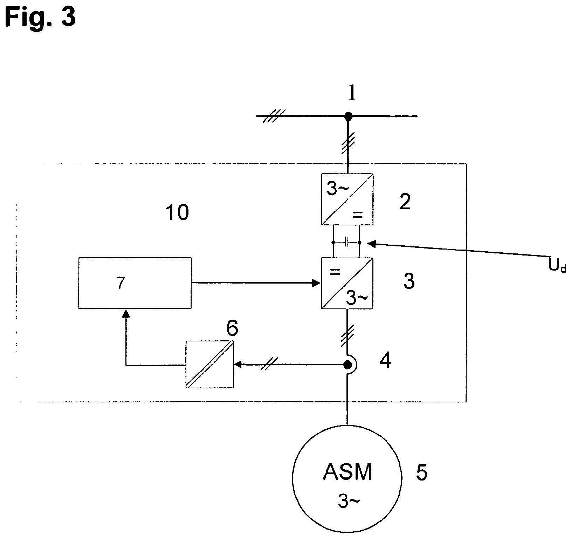

**Figur 3** zeigt in prinzipieller Weise eine Vorrichtung zur Verwirklichung eines Beispiels des erfindungsgemäßen Verfahrens.

Darin wird von einem Gleichrichter 2 die Netzspannung 1 zu einer Gleichspannung $U_d$ gleichgerichtet, welche dem Wechselrichter oder Umrichter 3 als Zwischenkreisspannung zugeführt wird. Letzter ist das Leistungs-Steuergerät für die Asynchronmaschine. Die Asynchronmaschine 5 (DAM oder ASM) ist mit den Ausgangsklemmen des Wechselrichters verbunden. Das Steuergerät 10 für die DAM 5 enthält eine Regelung 7, die von der Strommessung 4 gespeist wird.

Die Ansteuerung der Leistungs-Halbleiterschalter des Umrichters oder Wechselrichters 3 erfolgt über eine Steuerschaltung, die von einem Regler angesteuert wird. Es werden mindestens zwei der drei Motorphasenströme erfasst (Sensor 4 sowie Kopplung 6) und dem Regelsystem 7 zugeführt. Innerhalb des Regelsystems wird aus den erfassten Motorströmen der Ständerstromvektor bestimmt. Der Ständerspannungsvektor kann messtechnisch über eine Messung der Spannung an den Ausgangsklemmen des Wechselrichters 3 ermittelt oder aus der erfassten Zwischenkreisspannung $U_d$ und dem Schaltzustand des Wechselrichters rekonstruiert werden. Dazu kann die Zwischenkreisspannung messtechnisch erfasst oder geschätzt werden.

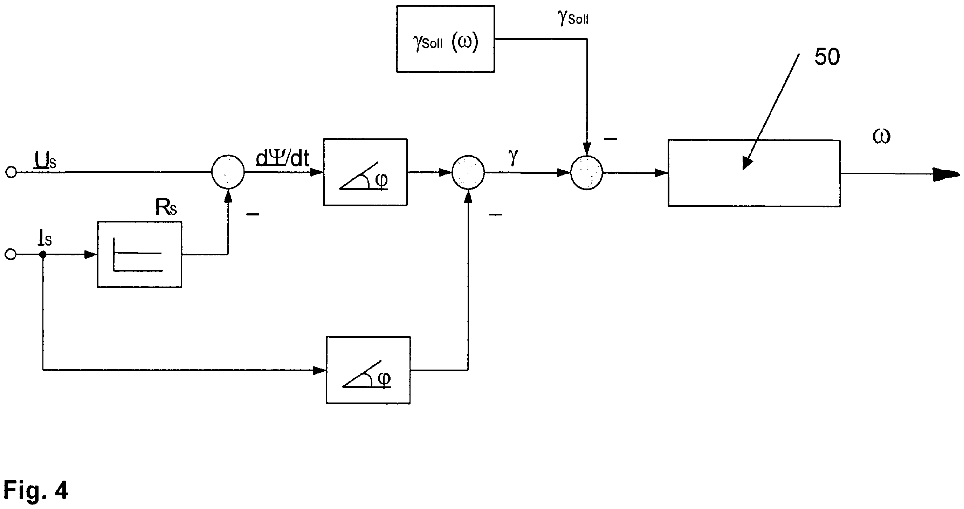

Ein beispielhaftes Regelsystem 7 ist in der **Figur 4** dargestellt.

Aus dem Ständerspannungsvektor $\underline{u}_S$ und dem Ständerstromvektor $\underline{i}_S$ sowie dem Ständerwiderstand $R_S$ wird der Ständerfluss-Änderungsvektor d $\Psi_S$/dt in Anlehnung an Gleichung (2) berechnet. Anschließend wird der Winkel $\gamma$ (gamma) aus der Winkeldifferenz zwischen Ständerstromvektor und Ständerfluss-Änderungsvektor ermittelt.

Dieser Winkel wird in einem bspw. integrierenden Winkelregler 50 drehrichtungsabhängig auf einen Winkelsollwert von 90° bei positiver und -90° bei negativer Drehrichtung der aktuellen Drehfeldfrequenz geregelt.

Im Übergangspunkt von 90° auf -90° und von -90° auf 90° (also bei einer Drehfeldfrequenz nahe Null) kann eine Hysterese verwendet werden.

Die Verstärkung des (integralen) Winkelreglers 50 kann hierbei zur Optimierung des Betriebsverhaltens adaptiv unter Berücksichtigung der aktuellen Ständerfrequenz angepasst werden. Der Ausgang des Winkelreglers stellt die einzuprägende Ständer-Drehfeldfrequenz $\omega$ (omega) dar.

Parallel zum (oder zusammen mit dem) Winkelregler 50 wird über einen Stromregler 51 die Amplitude des Ständerstromvektors $\underline{i}_S$ auf einen gegebenen Sollwert geregelt. Der Regler 51 erhält dabei am Eingang die Regeldifferenz 51a zugespeist, die sich aus Sollwert und Istwert bildet. Der Sollwert kann z.B. konstant auf einen Bruchteil des Magnetisierungsstroms der DAM 5 oder einen Bruchteil des Nennstroms der angesteuerten Maschine eingestellt werden, oder zwischen 5% bis 20% des Nennstroms des Umrichters als Steuergerät betragen.

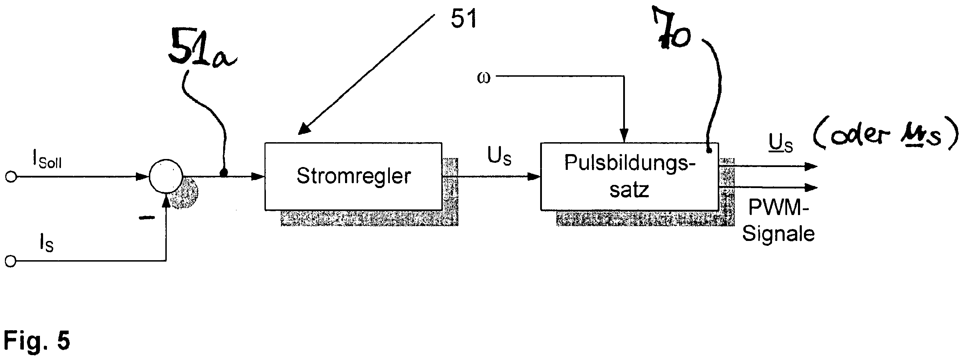

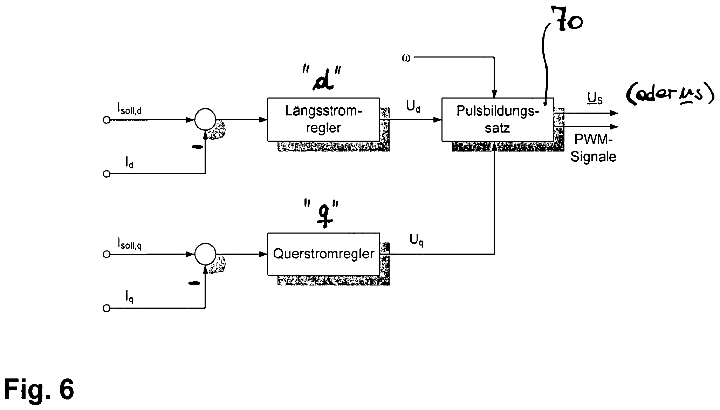

Der Stromregler 51 kann in bekannter Art und Weise ausgeführt werden, bspw. als einfacher PI-Regler nach **Figur 5** oder als parallele d,q PI-Reglerstruktur nach **Figur 6.** Im letzteren Fall ist zu beachten, dass der Querstromsollwert des Querstromreglers 60 zu Null gewählt werden und der Längsstrom auf einen Sollwert größer Null geregelt werden sollte, bevorzugt zwischen 5% und 20% des Nennstroms des Umrichters 10. Beide Regler erstellen einen Pulsbildungssatz 70 für den Wechselrichter 3 im Umrichter 10.

Ferner kann die Transformation auf das feldorientierte Koordinatensystem während des Fangens bis zum Erreichen des synchronen Punkts fehlerbehaftet sein, da die korrekte Lage des Rotorflusses während des Fangen nicht bekannt ist. Dies wirkt sich aber auf das Fangverfahren nicht aus und soll daher in diesem Beispiel vernachlässigt werden.

In einem anderen Beispiel kann im Zeitabschnitt während eines Fangens die vom Querstromregler 60 generierte Querspannung, welche proportional zur induzierten Spannung ist, als weiteres Korrektursignal verwendet werden.

Der Stromregler stellt sicher, dass sowohl bei einer entmagnetisierten als auch bei einer Asynchronmaschine mit restlicher Remanenz eine aktive Regelung der Stromamplitude erfolgt und unerwünschte Stromspitzen oder Überströme verhindert werden. Der Stromregler 51 erzeugt an seinem Ausgang einen Stellwert für die Länge des Ständerspannungsvektors, die über das Pulsmuster 70 eingestellt wird.

Die Ausgänge des Winkel- und Stromreglers (einzuprägende Ständerdrehfeldfrequenz sowie die Länge des Ständer-Spannungsvektors) werden an den Pulsbildungssatz 70 übergeben, welcher unter Kenntnis der Zwischenkreisspannung die Steuersignale für die Schalter der Endstufe ermittelt.

Die Pulsbildung kann entsprechend dem Stand der Technik ausgeführt werden, z.B. in einer Zweischaltermodulation, einer Raumzeigermodulation oder einer Sinus-Dreieck-Modulation. Zur Optimierung des Verhaltens kann bei der Berechnung des Aussteuergrads die Wechselrichter-Fehlerkennlinie Berücksichtigung finden.

Die Ständer-Drehfeldfrequenz stellt in den Beispielen der Erfindung eine Zustandsgröße dar, die zu Beginn des Verfahrens mit einem Startwert als Frequenz initialisiert werden kann, ja eigentlich sollte.

Als Initialisierungswert bieten sich je nach Applikation unterschiedliche Frequenzen an. Z.B. kann die letzte bekannte (mechanische) Istfrequenz der Asynchronmaschine oder ein konstanter Startwert verwendet werden.

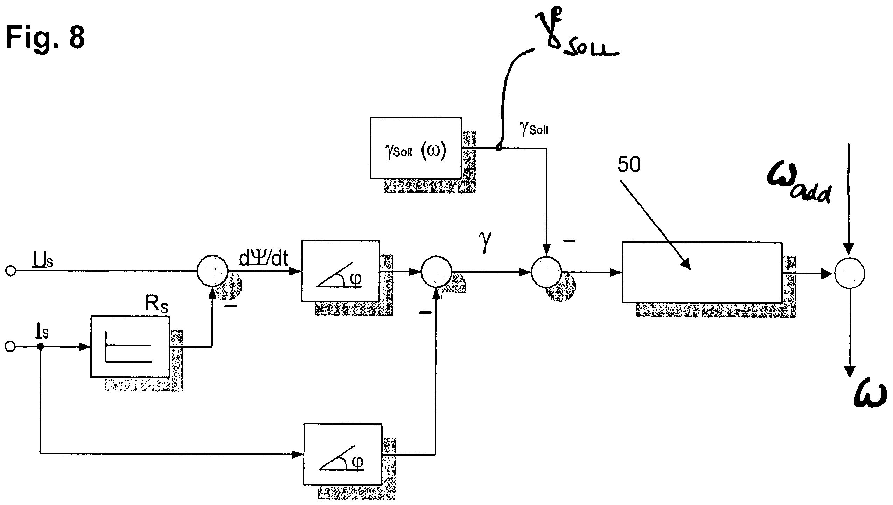

In einem anderen Beispiel, das sich an Figur 4 orientiert, wird eine Vorsteuerung der Frequenz $\omega$ abhängig von einer Remanenz der Maschine 5 verwendet. Dieses Beispiel zeigt **Figur 8.**

Zur Verbesserung des Fangens einer bspw. trudelnden Maschine kann eine Vorsteuerung verwendet werden. Diese hat sich besonders dann als hilfreich erwiesen, wenn größere Abweichungen zwischen dem Startwert des Ausgangsreglers 50 der Figur 4 und der mechanischen Drehfrequenz der Maschine bestehen, auf die zu- oder aufgeschaltet wird.

Die physikalische Ursache der Restremanenz der Asynchronmaschine 5 ist auf Ausrichtung von Elementarmagneten im Rotor zurückzuführen. Während des normalen Betriebs einer Asynchronmaschine wird vom Magnetisierungsstrom ein Feld eingeprägt, welches unter anderem zur Ausrichtung von Elementarmagneten im Rotor führt. Diese Ausrichtung kann, auch nach dem Abschalten des Umrichters, in einem begrenzten Umfang erhalten bleiben. Dadurch entsteht eine restliche Feldstärke, welche restliche Remanenz oder Restremanenz genannt wird, die bei einer rotierenden Asynchronmaschine zu einer geringen induzierten Spannung (vom Rotor aus) führt.

Orientiert man das Fangverhalten an möglichst geringen Strömen, kann eine vollständige Umorientierung der noch ausgerichteten Elementarmagnete des Rotors nicht sichergestellt werden, das Feld also nicht ummagnetisiert werden. Dadurch hat die Restremanenz noch einen Einfluss und erzeugt eine Spannung, die als induzierte Spannung in dem System des Modells auftritt. Sie erscheint dort als Störgröße.

Bei den für die Fangschaltung typischen geringen Sollströmen wird während des Fangens das durch Remanenz verursachte Feld nicht ummagnetisiert, so dass eine mit der mechanischen Drehfeldfrequenz rotierende Spannungskomponente auftritt, welche sich dem Stromregler als Störgröße darstellt.

Aufgrund hoher Dynamik des Stromreglers kann diese Störgröße weitgehend ausgeregelt werden, bei konstanter Amplitude des Ständerstromvektors. Diese Störgröße führt aber entweder zu einer Rotation der Ausgangsspannung des Stromreglers oder zu einer Änderung des Differenzwinkels $\gamma$.

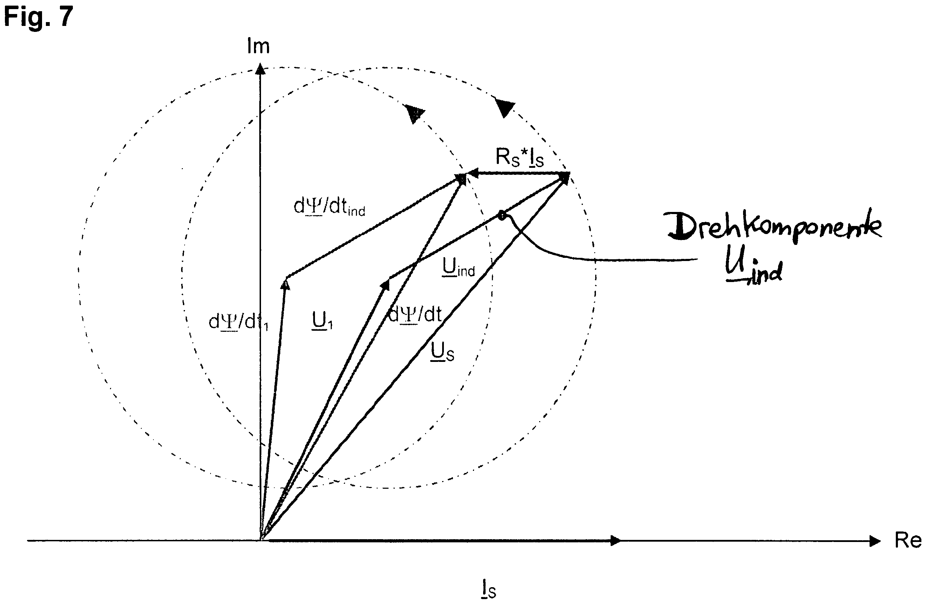

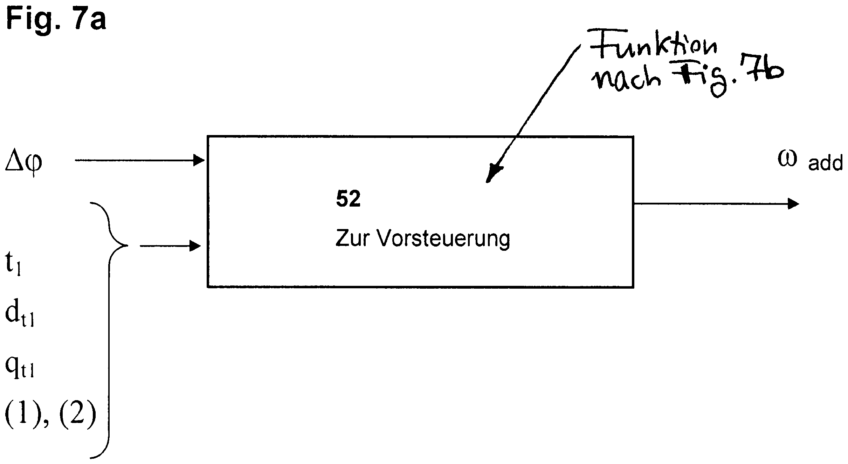

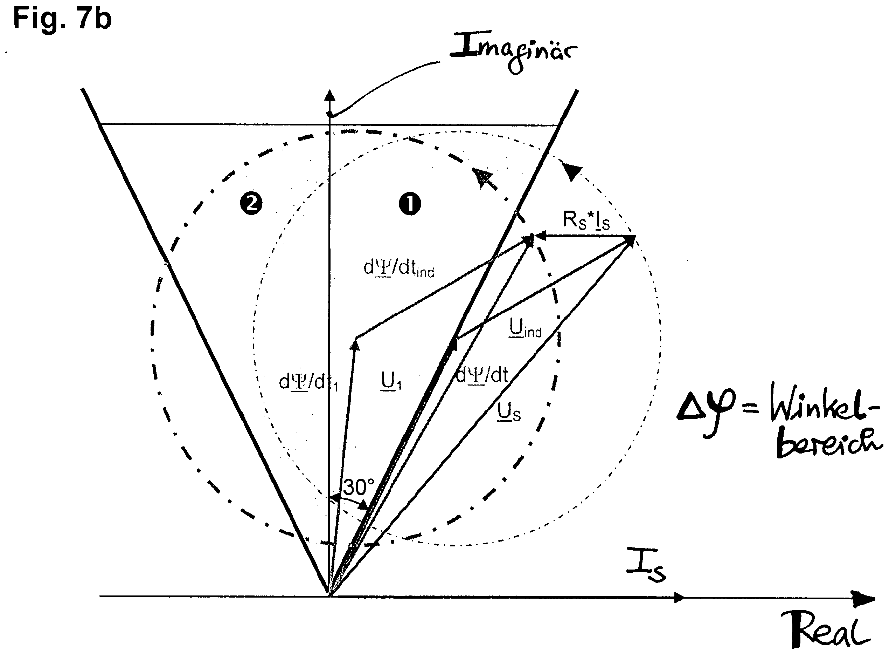

Eine d-q Zeigerdarstellung nach **Figur 7** veranschaulicht diesen physikalischen Effekt. Die Spannungskomponente $U_1$ (oder als Momentanwert $u_1$) bezeichnet den Ständer-Spannungsvektor ohne eine durch Remanenz verursachte Störgröße. Die durch Restremanenz verursachte Störung wird mit der Spannungskomponente $U_{ind}$ kompensiert.

Der Anteil $U_{ind}$ rotiert darin mit der Schlupffrequenz der Maschine und bildet eine Drehkomponente. Ihre Frequenz ist - im genannten Umfang - der Schlupffrequenz proportional. Vom Regler kann diese als Kennzeichnung oder Indiz einer tatsächlichen mechanischen Drehbewegung verwendet werden. Da der Fluss-Änderungsvektor direkt aus dem nahezu konstanten Spannungsfall am ohmschen Widerstand $R_S$ des Stators und aus dem veränderlichen Stator-Spannungsvektor $\underline{u}_s$ gebildet wird, hat auch dieser Änderungsvektor eine rotierende Komponente als Drehkomponente.

Es soll hier der Fall von **Figur 7a** als Funktionsglied 52 ausgewertet werden, bei dem die induzierte Spannung $\underline{U}_{ind}$ im Vergleich zum Spannungsanteil $\underline{U}_1$ deutlich kleiner ist, so dass der Spannungsvektor nicht rotiert, aber die Schwingung im Differenzwinkel zur Ermittlung eines verbesserten Startwerts des Winkelreglers 50 verwendet werden kann, wie das die **Figur 8** durch eine Vorsteuerung $\omega_{add}$ veranschaulicht.

Die anhand der rotierenden Komponente ermittelte Schlupffrequenz kann als additive Frequenz $\omega_{add}$ auf den Ausgang des Winkeldifferenzreglers geschaltet werden. Der Algorithmus, mit dem diese Schlupffrequenz ermittelt wird, wird im Folgenden als Funktion für die Vorsteuerung bezeichnet.

Die genannte Vorsteuerung mit $\omega_{add}$ kann als Startwert dienen, sie kann aber auch für die gesamte Steuerung Anwendung finden, wobei die Vorsteuerung einen Teil der Regelauslenkung übernimmt, und der Regler 50 nur noch Rest-Abweichungen kompensieren muss. Die Figur 8 ist dazu diejenige Schaltung von Figur 4, ergänzt um eine Vorsteuerung am Ausgang des Winkelreglers, welche von der Drehkomponente beeinflusst ist und von dem Funktionsglied 52 erfasst und als $\omega_{add}$ die Ausgangsgröße des geregelten Winkels beeinflusst, insbesondere hier additiv hinzugefügt wird.

In einer besonderen Ausführung kann eine Zeitdauer eingesetzt werden, innerhalb derer die Zuschaltung der Vorsteuerung zunächst ausgesetzt wird, um nach wenigen Millisekunden, bspw. mehr als 10msec bis 20msec zugeschaltet zu werden. Damit kann eine Vermischung normaler Einschwingvorgänge des Stromreglers mit dem Einschwingvorgang über die Vorsteuerung vermieden werden. Als Beginn der Laufdauer der Sperrzeit wird der Beginn des Einschaltens des Fangverfahrens vorgeschlagen.

Die Funktion 52 der **Figur 7a** soll anhand der **Figur 7b** erläutert werden, die ein logisches Entwurfsdiagramm darstellt, mit dem die Schwingung des Differenzwinkels bestimmt werden kann, welche Schwingung zur Vorsteuerung in Figur 8 verwendet wird.

Auszugehen ist von einer deutlich geringeren Amplitude der induzierten Spannung im Vergleich zum Hauptanteil der Statorspannung $\underline{u}_i$. Ermittelt werden soll Drehrichtung und Frequenz.

Dazu wird zunächst ein Winkelbereich $\Delta\varphi$ definiert, in dem der Differenzwinkel nach einem Einschwingen des Stromreglers 50 verweilen sollte. Im Beispiel kann der Winkelbereich um 90° herum gewählt werden, also 60° absolut betragen, oder $\pm30°$ um 90° herum, wie in Figur 7b eingezeichnet. Tritt nun der Differenzwinkel aus diesem definierten Band heraus, kann er aus der einen oder anderen der eingezeichneten Flächen (1) oder (2) austreten. Erfasst wird ein Zeitpunkt $t_1$ des Eintritts/Austritts in/aus der Fläche (1) oder in/aus der Fläche (2). Mit dem Zeitpunkt $t_1$ wird auch der Längsanteil $d_{t1}$ und der Queranteil $q_{t1}$ des Flussänderungs-Vektors festgehalten. Ebenso festgehalten wird der betretene/verlassene Bereich (1) oder Bereich (2). Mit diesen Werten, die von einer Ablaufsteuerung festgehalten werden können, kann auf die Frequenz geschlossen werden, wenn mindestens eine vollständige Rotation des induzierten Anteils $\underline{U}_{ind}$ erfolgte.

Diese symbolische Umschreibung ergibt für die Figur 7a als Eingangsgrößen $t_1$ (Zeitpunkt), $d_{t1}$ (Längskomponente), $q_{t1}$ (Querkomponente) und den betretenen/verlassenen Bereich (1) oder (2). Diese Werte gehen neben dem definierten Winkelbereich in die Funktion 52 ein, und es ergibt sich - nach mindestens einer vollständigen Rotation des induzierten Anteiles $\underline{U}_{ind}$ - der zu addierende Frequenzwert, welcher in der Vorsteuerung der Figur 8 nach dem Regler 50 (für die Winkeldifferenz) dem Ausgangswert $\omega$ des Reglers zugefügt, insbesondere addiert wird.

Die Drehrichtung ergab sich anhand des Längsanteils und des Queranteils beim Eintritt/Austritt in/aus dem jeweiligen der Bereiche (1) oder (2).

**Legenden zu den Figuren.**

| Zu Fig. 1 | Ersatzschaltbild einer Asynchronmaschine |
| Zu Fig. 2 | Zeigerdiagramm der Strom-, Spannungs- und Flussänderungs-Raumzeiger für den synchronen Punkt (s=0) |
| Zu Fig. 3 | Prinzipieller Aufbau eines Frequenz-Umrichters bestehend aus 1: speisendes Netz, 2: Gleichrichter, 3: Wechselrichter, 4: 2 bzw. 3phasige Stromerfassung, 5: Asynchronmaschine, 6: Messsignalaufbereitung und gegebenenfalls Transformation, 7: Regelung. |
| Zu Fig. 4 | Winkeldifferenzregelung |
| Zu Fig. 5 | Stromregelung mit Pulsbildung |
| Zu Fig. 6 | Stromregelung im d, q System sowie Pulsbildung |

**Patentansprüche**

1. **Verfahren zum Aufschalten** eines Steuergeräts (10), als Wechselrichter oder Umrichter (13), auf eine geberlos betriebene Asynchronmaschine (5) mit Statorwicklungen, welche mit einer mechanischen Drehzahl rotierbar ist, wobei die Asynchronmaschine (5) durch das Steuergerät (10) geregelt wird, **gekennzeichnet durch** das Verfahren mit folgenden Schritten:

    (a) Ermittlung eines Ständer-Stromvektors ($\underline{i}_S$) aus gemessenen Strömen der Statorwicklungen der Asynchronmaschine (5) sowie Ermittlung eines Ständer-Spannungsvektors ($\underline{u}_S$);

    (b) Berechnung eines Ständerfluss-Änderungsvektors ($d\underline{\Psi}_S/dt$) aus dem Ständer-Stromvektor ($\underline{i}_S$), dem Ständer-Spannungsvektor ($\underline{u}_S$) und einem Ständerwiderstand ($\underline{R}_S$) gemäß einem Maschinenmodell (100);

    (c) Berechnung einer Winkeldifferenz ($\gamma$) zwischen dem Ständer-Stromvektor ($\underline{i}_S$) und Ständerfluss-Änderungsvektor ($d\underline{\Psi}_S/dt$);

    (d) Regeln der berechneten Winkeldifferenz ($\gamma$) auf einen Sollwert von +90° oder -90°, wobei ein Ausgangssignal eines zugehörigen Reglers (50) als Winkeldifferenzregler (50) einer einzuprägenden Drehfeldfrequenz ($\omega$) des Ständer-Spannungsvektors entspricht und der Sollwert in Abhängigkeit von der Drehrichtung einer Ständer-Drehfeldfrequenz auf 90° oder -90° vorgegeben wird;

    (e) Regeln einer Amplitude des Ständer-Spannungsvektors über einen Stromregler (51), dem am Eingang eine Differenz aus einem Stromsollwert und einer der Amplitude des Ständerstroms entsprechenden Größe als Regeldifferenz (51a) zur Verfügung gestellt wird;

    (f) wobei das Aufschalten ein Zuschalten des Steuergeräts (10) auf die Asynchronmaschine (5) ist oder die mechanische Drehzahl der Asynchronmaschine (5) im Wesentlichen Null ist.

2. Verfahren nach dem Anspruch 1, wobei im Bereich einer Ständer-Drehfeldfrequenz von Null eine Umschaltung mit einer Hysterese realisiert wird.

3. Verfahren nach einem der Ansprüche 1 oder 2, wobei dem zur Winkeldifferenzregelung gehörigen Regler (50) Eingangsgrößen aus den gemessenen oder aus geschätzten Strömen, Spannungen und Flüssen oder deren Ableitungen vorgegeben werden, womit ein Wert für die Ständer-Drehfeldfrequenz oder die Ständer-Spannungsfrequenz ermittelt wird.

4. Verfahren nach einem der Ansprüche 1 bis 3, wobei mit dem Maschinenmodell (100) oder über eine Schätzung aus den transformierten oder un-transformierten Größen Ständerstromvektor und Ständerspannungsvektor ein Ständerfluss-Änderungsvektor gebildet wird.

5. Verfahren nach einem der Ansprüche 1 bis 4, wobei durch das Maschinenmodell oder eine Schätzung ein Differenzwinkel zwischen dem Ständerstromvektor und einem Spannungsabfall über Ständerinduktivitäten oder einem Änderungsvektor des Flusses gebildet wird und dieser Differenzwinkel als Wert für eine gesteuerte oder geregelte Veränderung der Drehfeldfrequenz genutzt wird.

6. Verfahren nach einem der Ansprüche 1 bis 5, wobei der Stromregler (51) in feldorientierter Form ausgebildet ist und arbeitet und ein Stellwert des q-Reglers des Stromreglers als Korrektursignal bei der Regelung (50) der Winkeldifferenz oder in anderen Bereichen des Verfahrens zum Aufschalten verwendet wird.

7. Verfahren nach einem der vorigen Ansprüche, wobei das Aufschalten des Steuergeräts (10) auf die Asynchronmaschine (5) bei einer unterschiedlichen Frequenz von Maschine und Steuergerät (10) erfolgt.

8. Verfahren nach dem Anspruch 1 oder 7, wobei die Asynchronmaschine (5) mit einer mechanischen Drehzahl rotiert, welche dem Steuergerät (10) nicht bekannt ist.

9. Verfahren nach dem Anspruch 1, wobei der Ständer-Stromvektor ($\underline{i}_S$) aus gemessenen Strömen der Statorwicklungen der Asynchronmaschine (5) sowie dem eingeprägten Ständer-Spannungsvektors ($\underline{u}_S$) und unter Berücksichtigung eines Wechselrichterfehlers oder einer Wechselrichter-Fehlerkennlinie ermittelt wird.

10. Verfahren nach Anspruch 1, wobei der Ständerfluss-Änderungsvektor gemäß dem Maschinenmodell (100) berechnet wird und unter Berücksichtigung der folgenden Gleichung

$$\underline{U}_S = R_S \underline{i}_S + \frac{d}{dt} \underline{\Psi}_S .$$

11. Verfahren nach dem Anspruch 1, wobei der Betrag der Winkeldifferenz (8) geregelt wird.

12. Verfahren nach Anspruch 1, wobei der Ständer-Spannungsvektor ($\underline{u}_S$) eingeprägt ist, als ein mit einer ersten Geschwindigkeit drehender Vektor der Ständerspannung ($\underline{u}_S$).

13. Verfahren nach einem der vorigen Ansprüche 1 bis 11, wobei eine Remanenz der Asynchronmaschine (5) von dem Regler (50) für die Winkeldifferenz verwendet wird, indem die Frequenz einer Spannung ($U_{ind}$) als Drehkomponente erfasst wird, welche einer tatsächlichen Schlupffrequenz der Asynchronmaschine (5) entspricht.

14. Verfahren nach einem der vorigen Ansprüche 1 bis 11, wobei eine Vorsteuerung des Reglers (50) für die Winkeldifferenz erfolgt, indem eine Frequenz einer induzierten Spannung ($U_{ind}$) das Ausgangssignal des Reglers (50) zumindest anfangs mindestens mitbestimmt.

15. Verfahren nach Anspruch 14, wobei die induzierte Spannung ($U_{ind}$) eine Schlupffrequenz aufweist und das Ausgangssignal des Reglers (50) für die Winkeldifferenz dauerhaft mitbestimmt.

16. Verfahren nach Anspruch 1, mit einem Vorgeben oder Einprägen des mit einer ersten Geschwindigkeit drehenden Vektors der Ständerspannung ($\underline{u}_S$) für die Ermittlung des Ständer-Stromvektors ($\underline{i}_S$) aus den gemessenen Strömen der Statorwicklungen sowie dem Ständer-Spannungsvektor ($\underline{u}_S$);

17. **Einrichtung zum Auf-oder Zuschalten** eines Steuergeräts (10) als Wechselrichter oder Umrichter (3) auf eine ohne Drehgeber betriebene Asynchronmaschine (5), welche mit einer mechanischen Drehzahl rotierfähig ist, wobei die Asynchronmaschine (5) durch das Steuergerät (10) geregelt wird, **gekennzeichnet durch**

(a) eine Einrichtung zur Ermittlung eines Ständer-Stromvektors ($\underline{i}_S$) aus gemessenen Strömen der Statorwicklungen der Asynchronmaschine (5) sowie einem mit einer Frequenz drehendem Ständer-Spannungsvektor ($\underline{u}_S$);
(b) eine Einrichtung mit einem Maschinenmodell (100) zur Berechnung eines Ständerfluss-Änderungsvektors ($d\underline{\Psi}_S/dt$) aus dem Ständer-Stromvektor ($\underline{i}_S$), dem Ständer-Spannungsvektor ($\underline{u}_S$) und einem Ständerwiderstand ($R_S$);
(c) eine Einrichtung zur Berechnung einer Winkeldifferenz ($\gamma$) zwischen dem Ständerstromvektor ($\underline{i}_S$) und dem Ständerfluss-Änderungsvektor ($d\underline{\Psi}_S/dt$);
(d) einen ersten Regler (50), um die berechnete Winkeldifferenz ($\gamma$) in Abhängigkeit von der Drehrichtung einer Ständer-Drehfeldfrequenz auf einen Sollwert von +90° oder -90° zu regeln, wobei ein Ausgangssignal des ersten Reglers einer einzuprägenden Drehfeldfrequenz ($\omega$) des Spannungsvektors des Ständers der Asynchronmaschine entspricht;

(e) einen Stromregler (51) zur Regelung einer Amplitude des Ständer-Spannungsvektors, wobei dem Stromregler am Eingang als Regeldifferenz (51a) eine Differenz aus einem Stromsollwert und einem Signal zuführbar ist, welches einer Amplitude des Ständerstroms entspricht.

**18.** Einrichtung nach Anspruch 17, wobei der Ständer-Spannungsvektor ein eingeprägter Vektor ist, zumindest anfangs, oder wobei der Ständer-Spannungsvektor nach Merkmal (a) mit einem Startwert als Frequenz initialisierbar ist, um eingeprägt zu sein.

## Claims

**1.** Method for connecting a control unit (10) as inverter or converter (13) to a sensorless operated asynchronous machine (5) with stator windings that is rotatable with a mechanical speed, wherein the asynchronous machine (5) is controlled by the control unit (10), **characterized by** the method comprising the following steps:

(a) determination of a stator current vector ($\underline{i}_s$) from measured currents at the stator windings of the asynchronous machine (5) and determination of a stator voltage vector ($\underline{u}_s$);
(b) calculation of a stator flux change vector ($d\underline{\Psi}_s/dt$) from the stator current vector ($\underline{i}_s$), stator voltage vector ($\underline{u}_s$) and a stator resistance ($R_s$) according to a machine model (100);
(c) calculation of an angle difference (Y) between stator current vector ($\underline{i}_s$) and stator flux change vector ($d\Psi s/dt$);
(d) controlling the calculated angle difference (Y) to a setpoint of +90° or -90°, wherein an output signal of a corresponding controller (50) as angle difference controller (50) corresponds to a rotating field frequency ($\omega$) of the stator voltage vector to be impressed and the setpoint is determined depending on the rotation direction of a stator rotating field frequency of +90° or -90°;
(e) controlling an amplitude of the stator voltage vector by means of a current controller (51) which, at the entrance, is supplied with a difference from a current setpoint and a value corresponding to the amplitude of the stator current as control difference (51a);
(f) wherein the connecting is a connecting of the control unit (10) to the asynchronous machine (5) or the mechanical speed of the asynchronous machine (5) substantially is zero.

**2.** Method according to claim 1, wherein in the range of a stator rotating field frequency of zero, switching is realised with a hysteresis.

**3.** Method according to one of the claims 1 or 2, wherein the controller (50) belonging to the angle difference control receives input values from the measured or estimated currents, voltages or fluxes or their derivatives, whereby a value for the stator rotating field frequency or the stator voltage frequency is determined.

**4.** Method according to one of the claims 1 to 3, wherein a stator flux change vector is formed with the machine model (100) or by estimation of transformed or untransformed values of stator current vector and stator voltage vector.

**5.** Method according to one of the claims 1 to 4, wherein by means of the machine model or an estimate, a difference angle is formed between stator current vector and a voltage drop by means of stator inductivities or a change vector of the flow, and this difference angle is used as value for an open-loop control or a closed-loop control change of the rotating field frequency.

**6.** Method according to one of the claims 1 to 5, wherein the current controller (51) is formed and works field-oriented and a control setting of the q-controller of the current controller is used as a correction signal for the controlling (50) of the angle difference or in other fields of the method for connecting.

**7.** Method according to one of the above claims, wherein the connecting of the control unit (10) to the asynchronous machine (5) takes place at a different frequency of machine and control unit (10).

**8.** Method according to claim 1 or 7, wherein the asynchronous machine (5) rotates with a mechanical speed unknown to the control unit (10).

**9.** Method according to claim 1, wherein the stator current vector ($\underline{i}_s$) is determined from measured currents at the stator windings of the asynchronous machine (5) as well as the impressed stator voltage vector ($\underline{u}_s$) and in consideration of an inverter error or an inverter error characteristic.

**10.** Method according to claim 1, wherein the stator flux change vector is calculated in accordance with the machine model (100) and in consideration of the following equation

$$\underline{U}_S = R_S \, \underline{i}_S + \frac{d}{dt} \, \underline{\Psi}_S .$$

**11.** Method according to claim 1, wherein the amount of the angle difference (8) is controlled.

**12.** Method according to claim 1, wherein the stator voltage vector ($\underline{u}_s$) is impressed as a vector of the stator voltage ($\underline{u}_s$) rotating with a first speed.

**13.** Method according to one of the above claims 1 to 11, wherein a remanence of the asynchronous machine (5) is used by the controller (50) for the angle difference, detecting the frequency of a voltage ($U_{ind}$) as rotational component, corresponding to an actual slip frequency of the asynchronous machine (5).

**14.** Method according to one of the above claims 1 to 11, wherein a pre-control of the controller (50) for the angle difference takes place by using a frequency of an induced voltage ($U_{ind}$) co-determining the output signal of the controller (50) at least at the beginning.

**15.** Method according to claim 14, wherein the induced voltage ($U_{ind}$) shows a slip frequency and continually co-determines the output signal of the controller (50) for the angle difference.

**16.** Method according to claim 1, with defining or impressing a stator voltage ($\underline{u}_s$) vector rotating with a first speed for the determination of the stator current vector ($\underline{i}_s$) from the measured currents of the stator windings as well as the stator voltage vector ($\underline{u}_s$).

**17.** Arrangement for connecting a control unit (10) as inverter or converter (3) onto an asynchronous machine (5) running without rotary encoder, which is rotatable with a mechanical speed, wherein the asynchronous machine (5) is controlled by the control unit (10), **characterized by**

(a) an arrangement for the determination of a stator current vector ($\underline{i}_s$) from measured currents of the stator windings of the asynchronous machine (5) and a stator voltage vector ($\underline{u}_s$) rotating with a frequency;
(b) an arrangement with a machine model (100) for the calculation of a stator flux change vector ($d\underline{\Psi}_s/dt$) from the stator current vector ($\underline{i}_s$), the stator voltage vector ($\underline{u}_s$) and a stator resistance ($R_s$);
(c) an arrangement for the calculation of an angle difference (Y) between stator current vector ($\underline{i}_s$) and stator flux change vector ($d\Psi_s/dt$);
(d) a first controller $\overline{(50)}$ for controlling the calculated angle difference (Y) depending on the rotary direction of a stator rotating field frequency to a setpoint value of +90° or -90°, wherein an output signal of the first controller corresponds to a rotating field frequency ($\omega$) of the voltage vector of the stator of the asynchronous machine to be impressed;
(e) a current controller (51) for the control of an amplitude of the stator voltage vector, wherein a difference from a current setpoint and a signal corresponding to an amplitude of the stator current is suppliable to the current controller at the entrance as control difference (51a).

**18.** Arrangement according to claim 17, wherein the stator voltage vector is an impressed vector, at least at the beginning, or the stator voltage vector according to feature (a) can be initialized in order to be impressed with a start value as frequency.

## Revendications

**1.** Procédé de commutation d'un appareil de commande (10), sous forme d'onduleur ou de convertisseur (13), sur une machine asynchrone (5) fonctionnant sans capteur de rotation avec des enroulements statoriques, qui peut tourner avec une vitesse de rotation mécanique, dans lequel on règle la machine asynchrone (5) au moyen de l'appareil de commande (10), **caractérisé en ce que** le procédé présente les étapes suivantes:

(a) détermination d'un vecteur de courant statorique ($\underline{i}_S$) à partir de courants mesurés des enroulements statoriques de la machine asynchrone (5) ainsi que détermination d'un vecteur de tension statorique ($\underline{u}_S$);

(b) calcul d'un vecteur de variation de flux statorique ($\underline{d\Psi}_S$/dt) à partir du vecteur de courant statorique ($\underline{i}_S$), du vecteur de tension statorique ($\underline{u}_S$) et d'une résistance statorique ($R_S$) conformément à un modèle de moteur (100);

(c) calcul d'une différence angulaire ([?]) entre le vecteur de courant statorique ($\underline{i}_S$) et le vecteur de variation de flux statorique ($\underline{d\Psi}_S$/dt);

(d) régulation de la différence angulaire calculée ([?]) sur une valeur de consigne de +90° ou -90°, dans lequel un signal de sortie d'un régulateur correspondant (50) sous forme de régulateur de différence angulaire (50) correspond à une fréquence de champ tournant ([?]) à appliquer du vecteur de tension statorique et on prédétermine la valeur de consigne à +90° ou -90° en fonction du sens de rotation d'une fréquence de champ tournant statorique;

(e) régulation d'une amplitude du vecteur de tension statorique au moyen d'un régulateur de courant (51), à l'entrée duquel on dispose d'une différence entre une valeur de consigne du courant et une grandeur correspondant à l'amplitude du courant statorique comme écart de régulation (51a);

(f) dans lequel la commutation est une connexion de l'appareil de commande (10) sur la machine asynchrone ou la vitesse de rotation mécanique de la machine asynchrone (5) est essentiellement zéro.

2. Procédé selon la revendication 1, dans lequel on réalise une inversion avec une hystérésis dans la région d'une fréquence de champ tournant statorique de zéro.

3. Procédé selon une des revendications 1 ou 2, dans lequel on prédétermine au régulateur (50) pour la régulation de la différence angulaire des grandeurs d'entrée à partir des courants, des tensions et des flux mesurés ou estimés ou de leurs dérivées, avec lesquelles on détermine une valeur pour la fréquence de champ tournant statorique ou la fréquence de tension statorique.

4. Procédé selon l'une quelconque des revendications 1 à 3, dans lequel on forme un vecteur de variation de flux statorique avec le modèle de moteur (100) ou au moyen d'une estimation à partir des grandeurs vecteur de courant statorique et vecteur de tension statorique, transformées ou non transformées.

5. Procédé selon l'une quelconque des revendications 1 à 4, dans lequel on forme, au moyen du modèle de moteur ou d'une estimation, un angle différentiel entre le vecteur de courant statorique et une chute de tension sur des inductances du stator ou un vecteur de variation du flux et on utilise cet angle différentiel comme valeur pour une variation commandée ou régulée de la fréquence de champ tournant.

6. Procédé selon l'une quelconque des revendications 1 à 5, dans lequel le régulateur de courant (51) est réalisé et travaille sous forme à champ orienté et on utilise pour la commutation une valeur de réglage du régulateur q du régulateur de courant comme signal de correction lors de la régulation (50) de la différence angulaire ou dans d'autres domaines du procédé.

7. Procédé selon l'une quelconque des revendications précédentes, dans lequel on effectue la commutation de l'appareil de commande (10) sur la machine asynchrone (5) à une fréquence différente de la machine et de l'appareil de commande (10).

8. Procédé selon la revendication 1 ou 7, dans lequel la machine asynchrone (5) tourne avec une vitesse de rotation mécanique, qui n'est pas connue de l'appareil de commande (10).

9. Procédé selon la revendication 1, dans lequel on détermine le vecteur de courant statorique ($\underline{i}_S$) à partir de courants mesurés des enroulements statoriques de la machine asynchrone (5) ainsi que du vecteur de tension statorique appliqué ($\underline{u}_S$) et en tenant compte d'un défaut de l'onduleur ou d'une courbe caractéristique erronée de l'onduleur.

10. Procédé selon la revendication 1, dans lequel on calcule le vecteur de variation de flux statorique conformément au modèle de moteur (100) et en tenant compte de l'équation suivante:

$$\underline{U}_S = R_S \underline{i}_S + \underline{d\psi}_S/dt$$

11. Procédé selon la revendication 1, dans lequel on régule la valeur de la différence angulaire (8).

**12.** Procédé selon la revendication 1, dans lequel le vecteur de tension statorique ($\underline{u}_S$) est appliqué, en tant que vecteur de la tension statorique ($\underline{u}_S$) tournant avec une première vitesse.

**13.** Procédé selon l'une quelconque des revendications précédentes 1 à 11, dans lequel on utilise une rémanence de la machine asynchrone (5) au moyen du régulateur (50) pour la différence angulaire, du fait que l'on détecte la fréquence d'une tension ($U_{ind}$) comme composante tournante, qui correspond à une fréquence de glissement effective de la machine asynchrone (5).

**14.** Procédé selon l'une quelconque des revendications précédentes 1 à 11, dans lequel on effectue une commande pilote du régulateur (50) pour la différence angulaire, du fait qu'une fréquence d'une tension induite ($U_{ind}$) détermine aussi au moins au début le signal de sortie du régulateur (50).

**15.** Procédé selon la revendication 14, dans lequel la tension induite ($U_{ind}$) présente une fréquence de glissement et détermine aussi durablement le signal de sortie du régulateur (50) pour la différence angulaire.

**16.** Procédé selon la revendication 1, dans lequel on prédétermine ou on applique le vecteur de la tension statorique ($\underline{u}_S$) tournant avec une première vitesse pour la détermination du vecteur de courant statorique ($\underline{i}_S$) à partir des courants mesurés des enroulements statoriques ainsi que du vecteur de tension statorique ($\underline{u}_S$).

**17.** Dispositif pour la commutation ou la connexion d'un appareil de commande (10) sous forme d'onduleur ou de convertisseur (3) sur une machine asynchrone (5) fonctionnant sans capteur de rotation, qui peut tourner avec une vitesse de rotation mécanique, dans lequel la machine asynchrone (5) est régulée par l'appareil de commande (10), **caractérisé par**

(a) un dispositif pour déterminer un vecteur de courant statorique ($\underline{i}_S$) à partir de courants mesurés des enroulements statoriques de la machine asynchrone (5) ainsi que d'un vecteur de tension statorique ($\underline{u}_S$) tournant avec une fréquence;

(b) un dispositif avec un modèle de moteur (100) pour le calcul d'un vecteur de variation de flux statorique ($d\underline{\Psi}_S/dt$) à partir du vecteur de courant statorique ($\underline{i}_S$), du vecteur de tension statorique ($\underline{u}_S$) et d'une résistance statorique ($R_S$);

(c) un dispositif pour le calcul d'une différence angulaire (⊡) entre le vecteur de courant statorique ($\underline{i}_S$) et le vecteur de variation du flux statorique ($d\underline{\Psi}_S/dt$);

(d) un premier régulateur (50), pour réguler la différence angulaire calculée (⊡) sur une valeur de consigne de +90° ou -90° en fonction du sens de rotation, dans lequel un signal de sortie du premier régulateur correspond à une fréquence de champ tournant à appliquer (⊡) du vecteur de tension du stator de la machine asynchrone;

(e) un régulateur de courant (51) pour la régulation d'une amplitude du vecteur de courant statorique, dans lequel une différence entre une valeur de consigne de courant et un signal, qui correspond à une amplitude du courant statorique, peut être envoyée à l'entrée du régulateur de courant comme écart de régulation (51a).

**18.** Dispositif selon la revendication 17, dans lequel le vecteur de courant statorique est un vecteur appliqué, au moins au début, ou dans lequel le vecteur de tension statorique peut être initialisé conformément à la caractéristique (a) avec une valeur initiale comme fréquence, afin d'être appliqué.

EP 2 227 857 B1

100

$R_S$    $L_{\sigma S}$    $L_{\sigma R}'$    $R_R'/s$

$\underline{i}_S$    $\underline{i}_R'$

$\underline{i}_\mu$

$\underline{u}_S$    $d/dt\,\underline{\Psi}_S$    $L_H$    $d/dt\,\underline{\Psi}_R'$

**Fig. 1**

**Fig. 2**

# Fig. 3

Fig. 4

EP 2 227 857 B1

$I_{Soll}$

$I_S$

**51a**

**51**

ω

**70**

Stromregler

$U_S$

Pulsbildungs-satz

$\underline{U}_S$ (oder $\underline{M}_S$)

PWM-Signale

**Fig. 5**

Fig. 6

Fig. 7

## Fig. 7a

$\Delta\varphi$ → [ **52** Zur Vorsteuerung ] → $\omega_{add}$

$t_1$
$d_{t1}$
$q_{t1}$
$(1), (2)$

*Funktion nach Fig. 7b*

EP 2 227 857 B1

Fig. 7b

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3820125 C2
- DE 19532477 A1
- DE 19503658 A1
- EP 469177 A1
- DE 3543941 A1
- DE 3543983 A1
- DE 19919752 C1